# EUROPÄISCHE PATENTSCHRIFT

(11) **EP 1 695 428 B1**
(45) Veröffentlichungstag und Bekanntmachung des Hinweises auf die Patenterteilung: **06.11.2013**
(21) Anmeldenummer: 04820466.3
(22) Anmeldetag: 08.12.2004
(51) Int. Cl.: H02P 6/16

(54) **BESTIMMUNG DER ROTORLAGE IN EINEM ELEKTROMOTOR**
DETERMINING THE POSITION OF THE ROTOR IN AN ELECTRIC MOTOR
DETERMINATION DE LA POSITION DU ROTOR D'UN MOTEUR ELECTRIQUE

(30) Priorität: 09.12.2003 DE 10357504
(43) Veröffentlichungstag der Anmeldung: 30.08.2006
(73) Patentinhaber: BSH Bosch und Siemens Hausgeräte GmbH, 81739 München (DE)
(72) Erfinder: DE FILIPPIS, Pietro, I-20124 Milano (IT); HOCHHAUSEN, Ralf, 85051 Ingolstadt (DE); SEYFARTH, Jörg, 93057 Regensburg (DE)
(86) Internationale Anmeldenummer: PCT/EP2004/053348
(87) Internationale Veröffentlichungsnummer: WO 2005/060069

(56) Entgegenhaltungen:
- EP-A- 0 802 622
- US-A- 4 631 456
- US-A1- 2003 062 863

## Beschreibung

Die vorliegende Erfindung betrifft ein Verfahren und eine Vorrichtung zur Bestimmung der Lage des Rotors in einem Elektromotor.

Eine genaue Kenntnis der Rotorlage ist für den Betrieb eines bürstenlosen Elektromotors, dessen Drehzahl durch die Frequenz einer zugeführten Wechselspannung bestimmt ist, von entscheidender Bedeutung, um einen solchen Motor ohne Hinzunahme eines Hilfsmotors starten und bei willkürlich festlegbaren Drehzahlen betreiben zu können. Eine herkömmliche Technik zum Erfassen der Rotorlage ist, in der Nähe einer auf der Welle des Motors befestigten, mit Magneten bestückten Tachoscheibe mehrere Hall-Sensoren anzubringen, die jeweils den Durchgang eines Nord- oder Südpols eines Magneten der Tachoscheibe durch einen Signalimpuls oder einen Pegelwechsel eines kontinuierlichen Signals anzeigen. Die Zahl der Magnetpole eines solchen Tachorades ist im Allgemeinen die gleiche wie die des Rotors.

Die Energieversorgung des Motors erfolgt im Allgemeinen über einen elektronischen Wechselrichter, der für jede 360°-Umdrehung des Magnetfeldes im Motor (entsprechend einer Drehung der Welle von 360°/n bei einem Motor mit n Polpaaren) eine Sequenz von sechs Schaltzuständen in einem Winkelabstand von 60° elektrisch erzeugt. Die Folge der Schaltzustände erzeugt im Motor ein rotierendes magnetisches Feld, das sich von einem Schaltzustand zum nächsten in Schritten von 60° elektrisch weiter dreht. Wenn sich entsprechend einer vollständigen Umdrehung des Magnetfeldes der Rotor um 360°/n weiter dreht, liefert ein einzelner Hall-Sensor nur zwei Impulse. Da sich im Laufe einer Magnetfeldumdrehung aber sechs Schaltzustände abwechseln, werden pro vollständiger Umdrehung des Magnetfeldes sechs Schaltimpulse benötigt, um den Übergang von einem Schaltzustand zum nächsten aufzulösen. Um diese Schaltimpulse jeweils phasenrichtig zu erzeugen, ist es bekannt, insgesamt drei Hall-Sensoren jeweils in einem Raumwinkel von 120°/n im Bezug zueinander an der Tachoscheibe anzuordnen. Diese drei Sensoren liefern Schaltimpulse zum Umschalten des Wechselrichters von einem Zustand auf den nächsten in Winkelabständen der Welle von 120°/n.

Diese drei Sensoren sind natürlich kostspielig, und sie erfordern Zeit und vor allem Platz zum Einbau, der nicht notwendigerweise immer verfügbar ist. Ein weiteres Problem ist, dass Ungenauigkeiten in der Anordnung der Magneten auf der Tachoscheibe dazu führen können, dass die Zeitabstände zwischen zwei Schaltimpulsen im Laufe einer Umdrehung der Welle periodisch variieren, was zu einem ungleichmäßigen Lauf des Motors und damit zu verstärkter Geräuschentwicklung führt.

Ein Verfahren zur Bestimmung der Rotorlage in einem Elektromotor und eine Vorrichtung zur Durchführung des Verfahrens sind ferner aus EP 802 622 A2 bekannt. Dieses Verfahren umfasst Schritte zum Erfassen der Zeitpunkte von Durchgängen des Rotors durch eine Referenzlage und zum Ableiten der Rotorlage zwischen Referenzlagendurchgängen.

Eine weitere Vorrichtung zur Bestimmung der Rotorlage ist in US 4 631 456 A offenbart.

Aufgabe der vorliegenden Erfindung ist, ein Verfahren und eine Vorrichtung zum Erfassen der Rotorlage in einem Elektromotor anzugeben, die eine genaue Lageerfassung bei geringen Kosten und geringem Platzbedarf, insbesondere in der Nachbarschaft des Rotors, ermöglichen.

Die Aufgabe wird gelöst durch ein Verfahren mit den Merkmalen des Anspruchs 1 bzw. eine Vorrichtung mit den Merkmalen des Anspruchs 8.

Durch den abstimmbaren Oszillator können alle herkömmlicherweise am Rotor angeordneten Sensoren ersetzt werden, bis auf einen einzigen, der benötigt wird, um eine Referenzperiode zu liefern, auf die der Oszillator abgestimmt werden kann. Da der Oszillator nicht in unmittelbarer Nachbarschaft zum Rotor angeordnet sein muss, wird in der Umgebung des letzteren Platz eingespart, der es ermöglicht, den Elektromotor kompakter zu bauen. Darüber hinaus kann aufgrund des verringerten Platzbedarfs des erfindungsgemäßen einzelnen Detektors im Vergleich zu herkömmlichen drei Detektoren der Detektor auch unmittelbar an den Magneten des Rotors platziert werden, so dass Kosten und Platzbedarf einer Tachoscheibe entfallen und Fehler bei der Bestimmung der Referenzlagendurchgänge, die auf Ungenauigkeiten bei der Anordnung der Magnete an der Tachoscheibe zurückgehen, vermieden werden.

Das erfindungsgemäße Verfahren ist mit einer an sich bekannten Phasenregelkreis(PLL)-Schaltung ausführbar, in der bei jedem Durchgang des Rotors durch die Referenzlage die Phase des Oszillators erfasst wird und die Abstimmfrequenz des Oszillators anhand der erfassten Abweichung korrigiert wird.

Eine einfache PLL-Schaltung würde eine Vielzahl von Umdrehungen des Elektromotors erfordern, bevor sie auf die Frequenz des Rotors einrastet und als Frequenznormal für die Ableitung der Magnetfeldsteuerung dienen kann. Ein solches Einrasten wird erheblich dadurch beschleunigt, dass die Zeitdauer zwischen zwei Referenzlagendurchgängen gemessen und eine von dieser Zeitdauer abgeleitete Zeit als Periode des Oszillators vorgegeben wird. So genügen beim Starten des erfindungsgemäßen Motors schon zwei Referenzlagendurchgänge, um zu einer brauchbaren Schätzung der Periode zu gelangen, auf deren Grundlage im Weiteren der abstimmbare Oszillator betrieben werden kann.

Bei einem Motor mit einer Mehrzahl n von Polpaaren des Rotors können Fertigungstoleranzen dazu führen, dass auch bei exakt konstanter Drehgeschwindigkeit des Motors die zwischen zwei Referenzlagendurchgängen gemessenen Zeitdauern rhythmisch schwanken. Um den Einfluss solcher Schwankungen zu begrenzen, wird man zweckmäßigerweise beim Ableiten der als Periode des Oszillators vorzugebenden Zeit aus den Zeitpunkten der Referenzlagendurchgänge einen Schritt des Mittelns der bei jeweils n aufeinanderfolgenden Referenzlagendurchgängen ermittelten Zeitdauern vorsehen.

Wenn die Drehzahl des Motors herauf- oder heruntergeregelt werden soll, ist die zwischen zwei Referenzlagenduchgängen gemessene Zeitdauer nicht konstant, sondern sie nimmt kontinuierlich ab oder zu. Dem kann beim Bestimmen der Rotorlage leicht Rechnung getragen werden, indem bei jedem Durchgang des Rotors durch die Referenzlage die seit dem vorhergehenden Durchgang verstrichene Zeitdauer ermittelt wird, die Differenz zwischen dieser Zeitdauer und einer bei dem vorhergehenden Durchgang ermittelten Zeitdauer berechnet wird und die als Periode des Oszillators abgeleitete Zeit durch Hinzuaddieren der mit einem positiven Faktor gewichteten Differenz korrigiert wird. Dieser Faktor wird vorzugsweise bei ca. 0,5 gewählt.

Die abgeleitete Rotorlage kann zweckmäßig genutzt werden, um den zeitlichen Verlauf von an die mehreren Phasen des Motors angelegten Versorgungsspannungen zu steuern. Diese Steuerung besteht vorzugsweise aus dem Anlegen eines mit der erfassten Periode zyklisch wiederkehrenden, aus einer Folge von diskreten Schaltzuständen bestehenden Musters an die Phasen des Motors, wobei jeweils bei einer vorgegebenen Rotorlage von einem der Zustände zum daraffolgenden umgeschaltet wird.

Ein bevorzugtes Einsatzgebiet der Erfindung sind Motoren für Haushaltsgeräte, insbesondere für Waschmaschinen.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1 eine stark schematisierte Darstellung einer erfindungsgemäßen Vorrichtung zur Rotorlagenerfassung und eines mit Hilfe der Vorrichtung angesteuerten Elektromotors;

Fig. 2 ein schematisches Schaltbild eines in der Vorrichtung der Fig. 1 verwendeten Wechselrichters;

Fig. 3 den zeitlichen Ablauf der zyklisch wiederkehrend an den Motor angelegten Schaltzustände; und

Fig. 4 ein Blockdiagramm einer bevorzugten Ausgestaltung der Vorrichtung zur Ro torlagenerfassung und eines mit Hilfe dieser Vorrichtung angesteuerten Elektromotors.

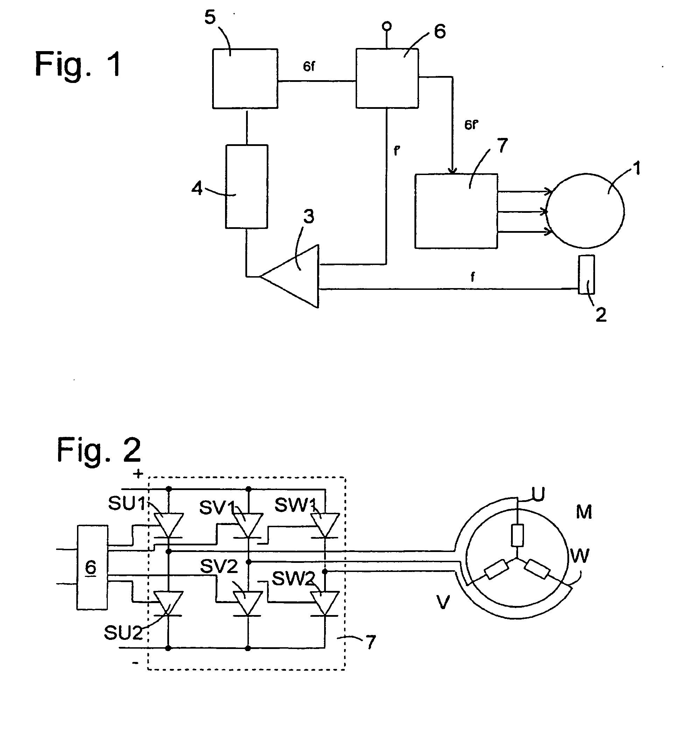

In dem Blockdiagramm der Fig. 1 bezeichnet 1 einen bürstenlosen Gleichstrommotor, dessen Rotor n = 4 Polpaare aufweist. Der Gleichstrommotor 1 ist durch einen Wechselrichter 7 gespeist, dessen Schalter zyklisch wechselnd von einer Steuerschaltung 6 in sechs verschiedene, jeweils um 60° elektrisch gegeneinander phasenverschobenen Magnetfeldern im Motor 1 entsprechende Zustände gebracht werden. Ein Hall-Sensor 2 ist in unmittelbarer Nachbarschaft des Rotors angeordnet, um das Feld jedes einzelnen ihn passierenden Pols des Rotors zu erfassen. Der Hall-Sensor 2 liefert ein Ausgangssignal, das jeweils beim Passieren eines ersten Poltyps eine ansteigende und beim Passieren des anderen Poltyps eine abfallende Flanke aufweist. Die Frequenz f des Ausgangssignals des Hall-Sensors 2 beträgt somit das n-Fache der Drehfrequenz des Motors 1.

Das Ausgangssignal des Hall-Sensors 2 liegt an einem ersten Eingang eines Phasenkomparators 3 an, dessen zweiter Eingang mit einem Vergleichssignal versorgt ist, dessen Zustandekommen noch erläutert wird. Der Phasenkomparator 3 kann z.B. durch einen elektronischen Zähler gebildet sein, der jeweils bei Eintreffen einer abfallenden Signalflanke vom Hall-Sensor 2 beginnt, Impulse eines Taktsignals, dessen Frequenz ein Vielfaches der Frequenz f ist, zu zählen, bis eine abfallende Signalflanke am zweiten Signaleingang empfangen wird, und das Zählergebnis als Messwert für eine Phasendifferenz zwischen den zwei Signalen ausgibt. Die durch ein Tiefpassfilter 4 geglättete Ausgabe des Phasenkomparators 3 steuert einen spannungsgesteuerten Oszillator 5 an. Im stationären Regime liefert dieser Oszillator das Vergleichssignal mit der Frequenz f.

Einer ersten Ausgestaltung zufolge hat das Vergleichssignal eine Form, die jederzeit einen Rückschluss vom Signalpegel auf die Phase zulässt, etwa eine Sägezahn-, Dreieck- oder Sinusform. Die Steuerschaltung 6 empfängt das Vergleichssignal des Oszillators 5 und vergleicht es mit einer Reihe von Referenzpegeln, die z.B. Phasen von 0°, 60°, 120°, ..., 300° entsprechen, um so die entsprechenden Phasen zu erfassen und zu diesen Phasen den Zustand der Schalter des Wechselrichters 7 zu ändern.

Einer zweiten Ausgestaltung zufolge erzeugt der Oszillator 5 im stationären Regime eine Hauptschwingung mit der Frequenz 6f und weist einen Frequenzteiler auf, der aus dieser Hauptschwingung das Vergleichssignal mit der Frequenz f erzeugt. Jede Periode der Hauptschwingung zeigt somit eine Drehung des Rotors um 60° an. Anhand der so bestimmten Rotorlage, mit jeder Periode der Hauptschwingung, schaltet die Steuerschaltung jeweils von einem Schaltzustand des Wechselrichters zum nächsten.

Fig. 2 zeigt schematisch den Wechselrichter 7. Er umfasst sechs Schalter SU1, SV1, SW1, SU2, SV2, SW2, von denen jeweils die Schalter SU1, SV1, SW1 zwischen einer positiven Versorgungsklemme (+) und einer Phase U, V bzw. W des Motors 1 angeordnet sind und die Schalter SU2, SV2, SW2 jeweils zwischen einer dieser drei Phasen und einer negativen Versorgungsklemme (-) angeordnet sind. Bei den Schaltern kann es sich in an sich bekannter Weise um IGBTs mit einer parallel geschalteten Freilaufdiode handeln.

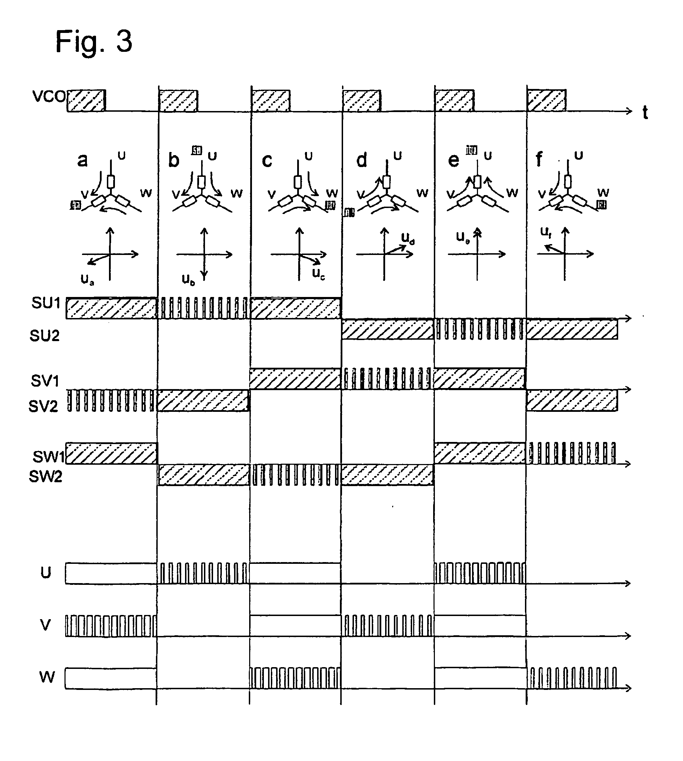

In dem Zeitdiagramm der Fig. 3 ist mit VCO die Hauptschwingung des spannungsgesteuerten Oszillators 5 dargestellt, auf deren ansteigende Flanke die Steuerschaltung 6 reagiert, indem sie jeweils von einem der sechs zyklisch nacheinander erzeugten Schaltzustände a, b, c, d, e, f zum nächsten wechselt.

Fig. 3 zeigt für jeden der Schaltzustände a bis f den Zustand der Schalter des Wechselrichters 7 sowie die daraus resultierenden Spannungen an den Phasen U, V, W des Elektromotors 1. Im Zustand a sind die Schalter SU1, SW1 geschlossen. Die Schalter SU2, SW2, SV1 sind offen, und der Schalter SV2 wird gepulst geöffnet und geschlossen. Entsprechend dem Tastverhältnis des Schalters SV2 fließt Strom durch die Phasen U, V bzw. W, V des Motors, und die resultierenden Magnetfelder überlagern sich zu einem Raumzeiger u . Im nachfolgenden Schaltzustand b sind die Schalter SV2, SW2 offen, SU2, SV1, SW1 geschlossen und SU1 ist pulsbreitenmoduliert; entsprechend fließt Strom durch die Phasen U, V und U, W, und es resultiert ein Raumzeiger u , der gegenüber u um 60° im Gegenuhrzeigersinn gedreht ist. Die Zustände geschlossen, offen, pulsbreitenmoduliert der Schalter für die Zustände c, d, e, f und die daraus resultierenden Stromverteilungen und Raumzeiger können aus Fig. 3 abgelesen werden und brauchen hier nicht im Detail erläutert zu werden. Wesentlich ist, dass sechs Perioden des Signals VCO eine Raumzeigerdrehung um 360° ergeben.

Selbstverständlich könnten die von der Steuerschaltung 6 gesteuerten Zustände des Wechselrichters 7 auch andere als die in Fig. 3 gezeigten sein, insbesondere käme auch, wenn auch weniger bevorzugt, ein Zustandsmuster in Betracht, bei dem jede Phase U, V, W des Motors 1 jeweils einen Zustand lang durch Öffnen beider zugeordneter Schalter stromlos gehalten wird, dann zwei Zustände lang mit der positiven Versorgungsspannung verbunden, dann wieder einen Zustand lang stromlos gehalten und schließlich zwei Zustände lang mit der negativen Versorgungsklemme verbunden wird und die drei Phasen jeweils um zwei Zustände gegeneinander phasenverschoben sind.

Die Vorrichtung der Fig. 1 zeigt die Lagen des Rotors, bei denen ein Weiterschalten des Raumzeigers im Motor erforderlich ist, zwar bei einem gleichmäßig rotierenden Motor zuverlässig an, doch können Probleme auftreten, wenn Drehzahländerungen zu einem Verlust der Phasenkopplung führen, oder während des Anfahrens des Motors eine Phasenkopplung erst hergestellt werden muss.

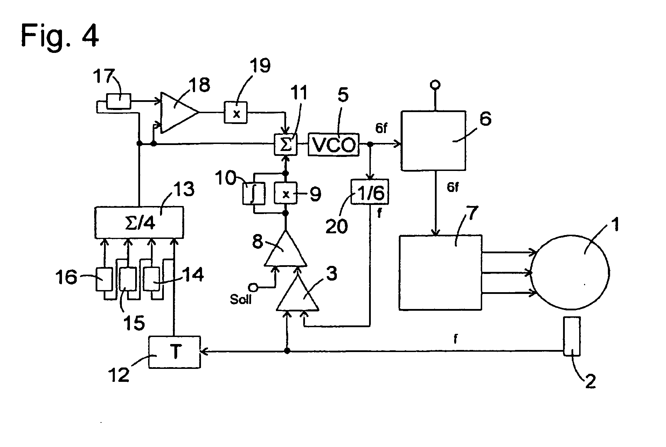

Eine weiterentwickelte Ausgestaltung, die diese und andere Probleme vermeidet, ist in Fig. 4 dargestellt. Komponenten der Vorrichtung aus Fig. 4, die den bereits mit Bezug auf Fig. 1 beschriebenen entsprechen, tragen die gleichen Bezugszeichen und werden nicht erneut behandelt.

Das Ausgangssignal des Phasenkomparators 3 bildet hier das nichtinvertierte Eingangssignal eines Differenzverstärkers 8, an dessen invertierendem Eingang ein für eine gewünschte Phasenverschiebung repräsentatives Signal "Soll" von außen zugeführt ist. Mit Hilfe dieses externen Signals kann ein beliebiger Nachlaufwinkel zwischen dem Rotor des Motors 1 und dem in dem Motor rotierenden magnetischen Feld eingestellt werden.

Das Tiefpassfilter 4 ist hier als Proportional/integralregler mit einem Gewichtungsteil 9, welches das Ausgangssignal des Differenzverstärkers 8 mit einem vorgegebenen Gewichtungsfaktor multipliziert, und einem Integrator 10 zum Integrieren des Ausgangssignals des Differenzverstärkers 8 gebildet. Die additiv überlagerten Ausgangssignale von Gewichtungsteil 9 und Integrator 10 werden dem spannungsgesteuerten Oszillator 5 als ein Frequenzsteuersignal zusammen mit weiteren in einem Addierglied 11 hinzuaddierten Beiträgen zugeführt.

An den Ausgang des Hall-Sensors 2 ist neben dem Phasenkomparator 3 eine Periodenmessschaltung 12 angeschlossen, die jeweils die Zeitdauer zwischen zwei aufeinanderfolgenden abfallenden Flanken des Signals vom Hall-Sensor 2 misst und als Ausgangssignal an eine Mittelwertschaltung 13 und ein erstes Schieberegister 14 liefert. An den Ausgang des ersten Schieberegisters ist ein Eingang eines zweiten Schieberegisters 15 und ein zweiter Eingang der Mittelwertschaltung 13 angeschlossen; an den Ausgang des zweiten Schieberegisters ein drittes Schieberegister 16 und ein dritter Eingang der Mittelwertschaltung 13, und an den Ausgang des dritten Schieberegisters ein vierter Eingang der Mittelwertschaltung 13. Mit jedem neuen Periodenmesswert, den die Messschaltung 12 liefert, triggert sie die Schieberegister 14, 15, 16, so dass diese den jeweils an ihrem Eingang anliegenden Messwert übernehmen und ausgeben. So liegen an den Eingängen der Mittelwertschaltung 13 immer die vier jüngsten Messwerte von Periodendauern des Hall-Sensorsignals an. Die Mittelwertschaltung 13 liefert an ihrem Ausgang den Mittelwert dieser Messwerte. (Allgemein sind bei einer Polpaarzahl des Rotors von n immer n Eingänge und n-1 Schieberegister vorgesehen, so dass über die Zahl n von Perioden des Hall-Sensorsignals gemittelt wird, die einer vollständigen Umdrehung des Rotors entspricht.) Zyklische Schwankungen der Periodendauer, die aus Ungleichmäßigkeiten in der Anordnung der vier Polpaare des Rotors resultieren können, sind somit im Ausgangssignal der Mittelwertschaltung 13 beseitigt. Dieses Ausgangssignal liefert einen wesentlichen Beitrag zum Eingangsspannung des spannungsgesteuerten Oszillators 5. Somit liegt nach zwei Referenzlagendurchgängen des Rotors eine Eingangsspannung am Oszillator 5 an, die nicht weit von der Eingangsspannung entfernt ist, die sich im stationären Regime einstellen würde, und die Frequenz des Oszillators kann schnell auf die des Rotors einrasten.

Der Ausgang der Mittelwertschaltung 13 ist ferner an eine Differenzschaltung 18 einerseits direkt, andererseits über ein viertes Schieberegister 17 angeschlossen, das in gleicher Weise wie die Schieberegister 14 bis 16 getriggert wird, so dass die Differenzschaltung 18 als Ausgangssignal die Differenz zwischen zwei aufeinanderfolgenden gemittelten Perioden des Hall-Sensorsignals liefert. Das Ausgangssignal der Differenzschaltung 18 entspricht also der mittleren Änderung der Periodendauer und zeigt einen beschleunigten oder verlangsamten Lauf des Motors 1 an. Ein solcher beschleunigter oder verlangsamter Lauf wird berücksichtigt, indem das Ausgangssignal der Differenzschaltung 18, in einem Gewichtungsteil 19 mit einem Faktor von 0,5 gewichtet, zu den bereits erwähnten Beiträgen zum Eingangssignal des Oszillators 5 im Addierglied 11 hinzuaddiert wird. So berücksichtigt die Schwingung des Oszillators 5 bereits eine Änderung der Periodendauer, die zwar in Extrapolation der Vergangenheit zu erwarten, bisher aber noch nicht gemessen worden ist. Die Ansteuerung des Elektromotors über die Steuerschaltung 6 und den Wechselrichter 7 ist die gleiche wie im Fall der Fig. 1, wobei in Fig. 4 lediglich der 1:6-Frequenzteiler 20, der das Vergleichssignal für den Phasenkomparator 3 liefert, als vom Rest der Steuerschaltung 6 getrennte Schaltungskomponente dargestellt ist.

## Patentansprüche

1. Verfahren zur Bestimmung der Rotorlage in einem Elektromotor (1), mit den Schritten: a) Erfassen der Zeitpunkte von Durchgängen des Rotors durch eine Referenzlage; b) Anpassen der Periode eines abstimmbaren Oszillators (5), so dass die Referenzlagendurchgänge zu einer vorgegebenen Phase des Oszillators (5) stattfinden; c) Ableiten der Rotorlage zwischen den Referenzlagendurchgängen aus der Schwingung des Oszillators (5), **dadurch gekennzeichnet, dass** die Zeitdauer zwischen zwei Referenzlagendurchgängen gemessen und eine von dieser Zeitdauer abgeleitete Zeit als Periode des Oszillators vorgegeben wird, und dass der Rotor n Polpaare aufweist und die Referenzlage jeweils dem Durchgang eines Pols jedes Polpaares an einem Detektor (2) entspricht, und dass das Ableiten der als Periode des Oszillators (5) vorgegebenen Zeit einen Schritt des Mittelns über jeweils n, für aufeinanderfolgende Referenzlagendurchgänge ermittelte Zeitdauern umfasst.

2. Verfahren nach Anspruch 1, **dadurch gekennzeichnet, dass** bei jedem Durchgang des Rotors durch die Referenzlage die Phase des Oszillators erfasst wird und die Abstimmfrequenz des Oszillators anhand der erfassten Abweichung korrigiert wird.

3. Verfahren nach Anspruch 1 oder 2, **dadurch gekennzeichnet, dass** bei jedem Durchgang des Rotors durch die Referenzlage die seit dem vorhergehenden Durchgang gemittelte Zeitdauer ermittelt wird, die Differenz zwischen dieser Zeitdauer und einer bei einem vorhergehenden Durchgang ermittelten Zeitdauer berechnet wird und die abgeleitete Zeit durch Hinzuaddieren der mit einem positiven Faktor gewichteten Differenz korrigiert wird.

4. Verfahren nach Anspruch 3, **dadurch gekennzeichnet, dass** der Faktor zwischen 0,3 und 0,7 beträgt.

5. Verfahren nach einem der vorhergehenden Ansprüche, **dadurch gekennzeichnet, dass** anhand der abgeleiteten Rotorlage der zeitliche Verlauf von an die mehreren Phasen des Motors (1) angelegten Versorgungsspannungen gesteuert wird.

6. Verfahren nach Anspruch 5, **dadurch gekennzeichnet, dass** die Versorgungsspannungen nach einem mit der erfassten Periode zyklisch wiederkehrenden, aus einer Folge von diskreten Zuständen bestehenden Muster gesteuert werden, wobei jeweils bei einer vorgegebenen Rotorlage von einem der Zustände zum darauf folgenden umgeschaltet wird.

7. Verfahren nach einem der vorhergehenden Ansprüche, **dadurch gekennzeichnet, dass** es an einem Motor eines Haushaltsgeräts, insbesondere einer Waschmaschine, eingesetzt wird.

8. Vorrichtung zur Bestimmung der Rotorlage in einem Elektromotor, mit einem am Elektromotor (1) angeordneten, für den Durchgang des Rotors durch eine Referenzlage empfindlichen Detektor (2) und einem auf das Ausgangssignal des Detektors synchronisierbaren Phasenregelkreis (3, 4, 5, 6), der ein für die Lage des Rotors repräsentatives Ausgangssignal liefert, **dadurch gekennzeichnet, dass** der Phasenregelkreis einen abstimmbaren Oszillator (5), einen Phasenkomparator (3) zum Liefern eines für eine Phasendifferenz zwischen einem Ausgangssignal des Detektors und einem Ausgangssignal des abstimmbaren Oszillators (5) repräsentativen Korrektursignals, ein Tiefpassfilter (4; 9, 10) für das Korrektursignal, eine Zeitmessschaltung (12-19) zum Ermitteln einer Periodendauer zwischen zwei Durchgängen des Rotors durch die Referenzlage und eine Überlagerungsschaltung (11) zum Überlagern eines für die ermittelte Periodendauer repräsentativen Ausgangssignals der Zeitmessschaltung und des tiefpassgefilterten Korrektursignals zu einem Abstimmsignal für den Oszillator (5) umfasst, und dass die Zeitmessschaltung (12-19) eine Mittelwertschaltung (13) zum Bilden des Mittelwerts der Zeitabstände zwischen n aufeinanderfolgenden Durchgängen des Rotors durch die Referenzlage umfasst.

9. Vorrichtung nach Anspruch 8, **dadurch gekennzeichnet, dass** der Detektor (2) im Magnetfeld des Rotors angeordnet ist.

10. Vorrichtung nach Anspruch 8 oder 9, **dadurch gekennzeichnet, dass** die Zeitmessschaltung (12-19) bei jedem Durchgang des Rotors durch die Referenzlage die seit dem vorhergehenden Durchgang gemittelte Zeitdauer ermittelt, die Differenz zwischen dieser Zeitdauer und einer bei einem vorhergehenden Durchgang ermittelten Zeitdauer berechnet und die ermittelte Periodendauer durch Hinzuaddieren der mit einem positiven Faktor gewichteten Differenz korrigiert.

## Claims

1. Method of determining the rotor position in an electric motor (1), comprising the steps: a) detecting the time instants of passages of the rotor through a reference position; b) adapting the periods of a tuneable oscillator (5) so that the reference position passages take place at a predetermined phase of the oscillator (5); and c) deriving the rotor position between the reference position passages from the oscillation of the oscillator (5), **characterised in that** the duration in time between two reference position passages is measured and a time derived from this time duration is predetermined as the period of the oscillator, and that the rotor has n pole pairs and the reference position corresponds on each occasion with the passage of a pole of each pole pair at a detector (2) and that the derivation of the time predetermined as the period of the oscillator (5) comprises a step of averaging on each occasion over n time durations determined for successive reference position passages.

2. Method according to claim 1, **characterised in that** the phase of the oscillator is detected for each passage of the rotor through the reference position and the tuning frequency of the oscillator is corrected on the basis of the detected difference.

3. Method according to claim 1 or 2, **characterised in that** the time duration averaged since the preceding passage is determined for each passage of the rotor through the reference position, the difference between this time duration and a time duration determined for a preceding passage is calculated and the derived time is corrected by addition thereto of the difference weighted by a positive factor.

4. Method according to claim 3, **characterised in that** the factor is between 0.3 and 0.7.

5. Method according to any one of the preceding claims, **characterised in that** the plot over time of supply voltages applied to the several phases of the motor (1) is controlled on the basis of the derived rotor position.

6. Method according to claim 5, **characterised in that** the supply voltages are controlled in accordance with a pattern which is cyclically repeating with the detected periods and consists of a sequence of discrete states, wherein changeover from one of the states to the succeeding state takes place on each occasion at a predetermined rotor position.

7. Method according to any one of the preceding claims, **characterised in that** it is used at a motor of a domestic appliance, particularly a washing machine.

8. Device for determining the rotor position in an electric motor, with a detector (2), which is arranged at the electric motor (1) and is sensitive to the passage of the rotor through a reference position, and a phase regulating circuit (3, 4, 5, 6), which can be synchronised with the output signal of the detector and which supplies an output signal representative of the position of the rotor, **characterised in that** the phase regulating circuit comprises a tunable oscillator (5), a phase comparator (3) for supplying a correction signal representative of a phase difference between an output signal of the detector and an output signal of the tunable oscillator (5), a low-pass filter (4; 9, 10) for the correction signal, a time measuring circuit (12-19) for determining a period duration between two passages of the rotor through the reference position and a superimposition circuit (11) for superimposition of an output signal, which is representative of the determined period duration, of the time measuring circuit and the correction signal, which has been subjected to low-pass filtering, on a tuning signal for the oscillator (5) and that the time measuring circuit (12-19) comprises a mean value circuit (13) for forming the mean value of the time spacings between n successive passages of the rotor through the reference position.

9. Device according to claim 8, **characterised in that** the detector (2) is arranged in the magnetic field of the rotor.

10. Device according to claim 8 or 9, **characterised in that** the time measuring circuit (12-19) determines, for each passage of the rotor through the reference position, the time duration averaged since the preceding passage, calculates the difference between this time duration and a time duration averaged for a preceding passage and corrects the determined period duration by addition thereto of the difference weighted by a positive factor.

## Revendications

1. Procédé de détermination de la position du rotor dans un moteur électrique (1), comprenant les étapes : a) détection des moments de passages du rotor à travers une position de référence ; b) adaptation de la période d'un oscillateur accordable (5), de sorte que les passages de la position de référence ont lieu pendant une phase prédéfinie de l'oscillateur (5) ; c) déduction de la position du rotor entre les passages de la position de référence à partir de l'oscillation de l'oscillateur (5), **caractérisé en ce que** la durée entre deux passages de la position de référence est mesurée et **en ce qu'**un temps déduit de cette durée est prédéfini comme période de l'oscillateur, et **en ce que** le rotor présente n paires de pôles et **en ce que** la position de référence correspond respectivement au passage d'un pôle de chaque paire de pôles sur un détecteur (2), et **en ce que** la déduction du temps prédéfini comme période de l'oscillateur (5) comprend une étape pour effectuer la moyenne par l'intermédiaire de respectivement n durées déterminées pour des passages successifs de la position de référence.

2. Procédé selon la revendication 1, **caractérisé en ce que** la phase de l'oscillateur est détectée à chaque passage du rotor à travers la position de référence et **en ce que** la fréquence d'accord de l'oscillateur est corrigée à l'aide de l'écart détecté.

3. Procédé selon la revendication 1 ou 2, **caractérisé en ce que** la durée moyenne depuis le passage précédent est déterminée à chaque passage du rotor à travers la position de référence, **en ce que** la différence entre cette durée et une durée déterminée lors d'un passage précédent est calculée et **en ce que** le temps déduit est corrigé en additionnant la différence pondérée avec un facteur positif.

4. Procédé selon la revendication 3, **caractérisé en ce que** le facteur est compris entre 0,3 et 0,7.

5. Procédé selon l'une quelconque des revendications précédentes, **caractérisé en ce que** le déroulement temporel de tensions d'alimentation appliquées sur les plusieurs phases du moteur (1) est commandé à l'aide de la position du rotor déduite.

6. Procédé selon la revendication 5, **caractérisé en ce que** les tensions d'alimentation sont commandées selon un modèle constitué d'une séquence d'états discrets se répétant de manière cyclique avec la période détectée, une commutation de l'un des états sur l'état suivant ayant lieu lors d'une position prédéfinie du rotor.

7. Procédé selon l'une quelconque des revendications précédentes, **caractérisé en ce qu'**il est appliqué sur un moteur d'un appareil ménager, notamment d'un lave-linge.

8. Dispositif destiné à déterminer la position du rotor dans un moteur électrique, comprenant un détecteur (2) disposé sur le moteur électrique (1), sensible au passage du rotor à travers une position de référence, et une boucle à verrouillage de phase (3, 4, 5, 6) pouvant être synchronisée sur le signal de sortie du détecteur, laquelle fournit un signal de sortie représentatif pour la position du rotor, **caractérisé en ce que** la boucle à verrouillage de phase comprend un oscillateur accordable (5), un comparateur de phase (3) destiné à fournir un signal de correction représentatif pour une différence de phase entre un signal de sortie du détecteur et un signal de sortie de l'oscillateur accordable (5), un filtre passe-bas (4 ; 9, 10) pour le signal de correction, un circuit de mesure du temps (12 - 19) pour déterminer une durée de période entre deux passages du rotor à travers la position de référence et un circuit de superposition (11) pour superposer un signal de sortie, représentatif pour la durée de période déterminée, du circuit de mesure du temps et du signal de correction filtré passe-bas en un signal d'accord pour l'oscillateur (5), **en ce que** le circuit de mesure du temps (12 - 19) comprend un circuit de valeur moyenne (13) pour former la valeur moyenne des intervalles de temps entre n passages successifs du rotor à travers la position de référence.

9. Dispositif selon la revendication 8, **caractérisé en ce que** le détecteur (2) est disposé dans le champ magnétique du rotor.

10. Dispositif selon la revendication 8 ou 9, **caractérisé en ce que** le circuit de mesure du temps (12 - 19), à chaque passage du rotor à travers la position de référence, détermine la durée moyenne depuis le passage précédent, calcule la différence entre cette durée et une durée déterminée lors d'un passage précédent et corrige la durée de période déterminée en additionnant la différence pondérée avec un facteur positif.
